## Europäisches Patentamt

## European Patent Office

## Office européen des brevets

(11) Veröffentlichungsnummer: **0 087 546**
**B1**

(12) **EUROPÄISCHE PATENTSCHRIFT**

(45) Veröffentlichungstag der Patentschrift:
07.12.88

(21) Anmeldenummer: **82810534.6**

(22) Anmeldetag: **09.12.82**

(51) Int. Cl.⁴: **B 32 B 31/08,** B 29 C 67/00,
B 32 B 15/08

(54) Verfahren zum kontinuierlichen Herstellen einer Verbundbahn.

(30) Priorität: **24.12.81 CH 8274/81**

(43) Veröffentlichungstag der Anmeldung:
**07.09.83 Patentblatt 83/36**

(45) Bekanntmachung des Hinweises auf die Patenterteilung:
**07.12.88 Patentblatt 88/49**

(84) Benannte Vertragsstaaten:
**AT BE CH DE FR GB IT LI NL**

(56) Entgegenhaltungen:
**DE-A- 1 504 245**
**DE-A- 2 061 946**
**GB-A- 1 277 350**
**US-A- 2 562 641**
**US-A- 3 533 886**

(73) Patentinhaber: **SCHWEIZERISCHE ALUMINIUM AG,**
**CH-3965 Chippis (CH)**

(72) Erfinder: **Büren, Ingo, Kornblumenweg 11,**
**D-7701 Hilzingen (DE)**
Erfinder: **Bregenzer, René, Waldparkstrasse 45,**
**CH-8212 Neuhausen (CH)**
Erfinder: **Severus, Harald, Tobelweg 6,**
**CH-8200 Schaffhausen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zum kontinuierlichen Herstellen einer Verbundbahn mit wenigstens einer Kernschicht aus Kunststoff und beidseitig angeordneten Deckschichten aus Metall, bei dem die Schichten unter Wärme- und Druckeinwirkung durch einen von einem achsparallelen Walzenpaar, dessen Achsenebene senkrecht zur Verbundbahnebene liegt, gebildeten Spalt geführt werden.

Bei der kontinuierlichen Herstellung von schichtförmigen Verbundmaterialien werden üblicherweise die einzelnen Schichten durch den Spalt eines mit einem Antrieb versehenen Walzenpaares geführt und dort unter Einwirkung von Druck und Wärme mittels eines Klebstoffes fest verbunden. Um einen Anpressdruck zu erzeugen, muss die Spalthöhe geringer als die Gesamtdicke der Schichten vor dem Verbinden gewählt werden. Bei nur geringen Anforderungen an die Haftfestigkeit zwischen benachbarten Schichten genügt bereits ein Anpressdruck, der wesentlich kleiner ist als die Druckfestigkeit der einzelnen Schichten. Für Anwendungen, bei denen das Verbundmaterial grossen mechanischen Belastungen ausgesetzt ist, muss bei der Herstellung der Verbundbahn eine hohe Haftfestigkeit zwischen benachbarten Schichten erzielt werden. Dies ist insbesondere erforderlich bei Verbundwerkstoffen mit einer Kernschicht aus Kunststoff und metallischen Deckschichten sowie vornehmlich als Konstruktionsmaterialien im Bauwesen und im Fahrzeugbau Verwendung finden. Die hohe Haftfestigkeit zwischen den Einzelschichten kann beispielsweise durch einen hohen Anpressdruck erreicht werden.

Bei hohem Anpressdruck – d.h. bei Einstellung einer Spalthöhe, die wesentlich kleiner ist als die Gesamtdicke der zu verbindenden Einzelschichten – treten jedoch bekanntlich wegen des besonderen Verformungsverhaltens des weichen Kunststoffkerns zwischen starren Deckblechen an der Verbundbahn wellenförmige Ausformungen auf.

Ein aus GB-A-1 277 350 bekanntes Verfahren zur kontinuierlichen Herstellung einer Verbundbahn der eingangs erwähnten Art weist zusätzlich eine Anzahl von mit Abstand hintereinander in verschiedenen Höhenlagen und gegeneinander auf Lücke versetzt angeordneten Rollen auf, welche einen Druckspalt bilden, dessen wirksame Spalthöhe kleiner ist als die Gesamtdicke der Schichten vor dem Verbinden. Mit dieser Vorrichtung lässt sich die unerwünschte Welligkeit vermeiden. Als nachteilig hat sich allerdings herausgestellt, dass sich nur bestimmte Materialkombinationen in einem begrenzten Dickenbereich und bei verhältnismässig geringer Produktionsgeschwindigkeit herstellen lassen.

Angesichts dieser Gegebenheiten haben sich die Erfinder das Ziel gesetzt, ein Verfahren der eingangs erwähnten Art zu schaffen, welches die Herstellung einer Verbundbahn mit guter Haftfestigkeit und Masshaltigkeit auf wirtschaftliche Weise ermöglicht.

Die Aufgabe wird erfindungsgemäss dadurch gelöst, dass durch Anlegen einer in Bewegungsrichtung wirkenden Zugkraft an die Verbundbahn die einzelnen Schichten ohne vorherige gegenseitige Berührung durch den von dem von der Zugkraft geschleppten Walzenpaar gebildeten Spalt, dessen Höhe kleiner ist als die Gesamtdicke der einzelnen Schichten vor dem Verbinden, geführt werden, wobei die Dicke der Verbundbahn im wesentlichen der Höhe des Spalts entspricht.

Beim erfindungsgemässen Verfahren erfolgt somit der Einzug der einzelnen Schichten der Verbundbahn in den Walzenspalt nicht wie bei den bisher bekannten Verfahren durch den Antrieb der Walzen, sondern über die an die Verbundbahn angelegte Zugkraft; der Walzenspalt übernimmt damit die Funktion eines Ziehspaltes. Dadurch ergeben sich im Walzenspalt völlig andere Verhältnisse bezüglich des Materialtransports, welche zu einer wellenfreien Verbundbahn mit guter Masshaltigkeit führen und überdies höhere Produktionsgeschwindigkeiten zulassen.

Durch den beim erfindungsgemässen Verfahren auftretenden besonderen Materialtransport im Walzenspalt müssen die unterschiedlichen Ausdehnungskoeffizienten der beteiligten Schichtkomponenten nicht mehr berücksichtigt werden und auch Gaseinschlüsse im Verbundmaterial werden vermieden.

Die Dicke der Kernschicht lässt sich auf ein beliebiges Mass reduzieren, sodass mit dem Verfahren beispielsweise mit einer einzigen vorgegebenen Dicke der Kernschicht Verbundbahnen jeder gewünschten Endabmessung hergestellt werden können, wobei eine Umstellung in der Verbunddicke sogar während des Produktionsbetriebes möglich ist.

Die Oberflächenqualität der Deckschichten bleibt erhalten, da über die geschleppten Walzen keine oder nur kontrollierte tangentiale Kräfte auf die Oberfläche der Verbundbahn einwirken. Durch die im wesentlichen senkrecht in die Verbundbahn eingebrachten Kräfte wird neben einer guten Masshaltigkeit auch eine gute Homogenität des Kunststoffkerns sowie eine ausgezeichnete Verbundhaftung erzielt.

Mit dem erfindungsgemässen Verfahren lassen sich insbesondere Verbundbahnen mit Deckschichten aus Aluminium oder Stahl herstellen. Hierbei können die Deckschichten bereits vor der Verbundherstellung die gewünschte Oberflächenbehandlung oder – struktur aufweisen.

Als Kernschichten sind insbesondere Thermoplaste, aber auch Duroplaste oder Elastomere geeignet. Die gegebenenfalls geschäumten Kunststoffe können zusätzlich Füllstoffe bzw. Fasern enthalten.

Bei mehreren Kernschichten kann mindestens eine der Kernschichten schon vor dem Einlauf der Einzelschichten in den Walzenspalt mit einer Deckschicht verbunden sein. Ebenso können die Deckschichten aussenseitig beschichtet – beispielsweise lackiert – oder profiliert bzw. strukturiert sein.

Die mit dem erfindungsgemässen Verfahren herstellbaren Verbundbahnen weisen bevorzugt eine Gesamtdicke zwischen 0,8 und 8 mm bei einer Dicke der metallischen Deckschichten von 0,05 bis 1 mm auf.

Die Zugkraft wird mit Vorteil nach dem Durchlaufen einer Abkühlstrecke – d.h. wenn der Verbund seine volle Schubsteifigkeit und Druckfestigkeit erreicht hat – an die Verbundbahn angelegt.

Die Spalthöhe des Walzenspaltes beträgt vorzugsweise 10 bis 90%, insbesondere 30 bis 60% der Gesamtdicke der Schichten vor dem Verbinden, wobei die Spalthöhe verstellbar sein kann.

Die Oberfläche der Walzen ist üblicherweise glatt, beispielsweise glanzverchromt. Die Walzen können jedoch auch eine profilierte bzw. strukturierte Oberfläche aufweisen.

Anstelle eines einzigen Walzenpaares können mehrere Walzenpaare mit in Bewegungsrichtung der Verbundbahn abnehmenden Spalthöhen angeordnet sein. Eine starke Dickenverminderung der Kernschicht kann damit in mehreren, hintereinandergeschalteten Ziehstufen durchgeführt werden.

Das Abzugwerk für die Verbundbahn weist bevorzugt wenigstens ein achsparalleles Rollenpaar auf. Zur Verbesserung des Reibschlusses zwischen Rollen und Verbundbahn kann die Oberfläche der Rollen mit einer Gummiauflage versehen sein.

Des weiteren hat es sich als vorteilhaft erwiesen, zwischen den Walzen und dem Abzugwerk eine Kühlvorrichtung anzuordnen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

Fig. 1 einen Querschnitt durch eine Vorrichtung zum kontinuierlichen Herstellen einer Verbundbahn;

Fig. 2 eine andere Ausführungsform einer erfindungsgemässen Vorrichtung.

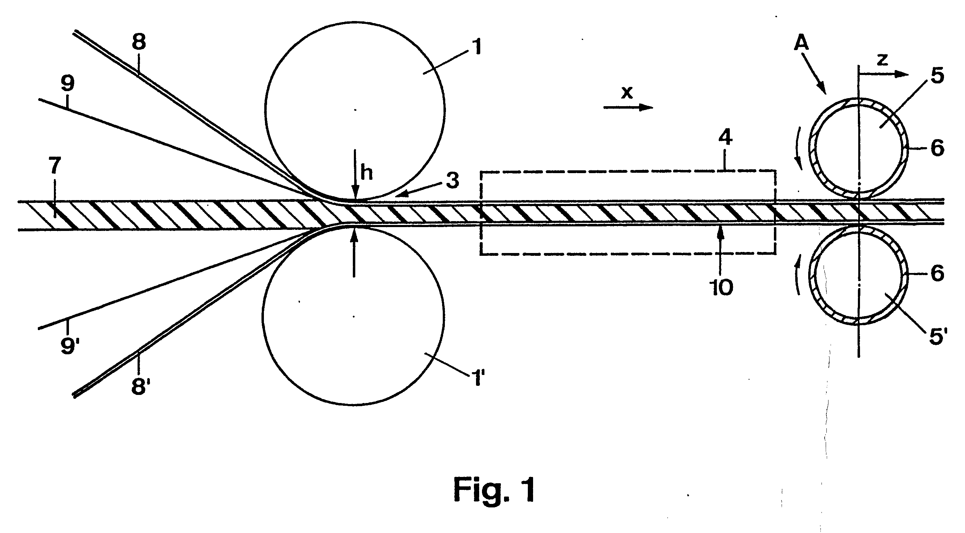

Ein achsparalleles, beheiztes Walzenpaar 1, 1', dessen Walzen einen Durchmesser von beispielsweise 500 mm aufweisen, bildet gemäss Fig. 1 einen Spalt 3 mit verstellbarer Spalthöhe h. Nach dem Walzenpaar 1, 1' ist eine – in der Zeichnung nicht näher dargestellte – Kühlvorrichtung 4 angeordnet, an welche sich ein Abzugwerk A mit einem Rollenpaar 5, 5' anschliesst. Die Oberfläche der einen Durchmesser von beispielsweise 140 mm aufweisenden und mit einem Antrieb versehenen Rollen 5, 5' ist mit einer Gummiauflage 6 belegt.

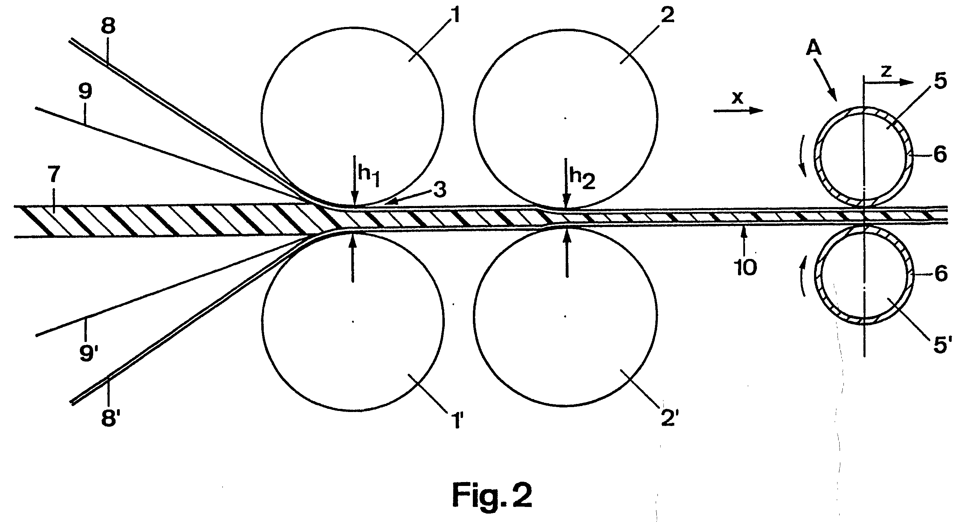

Bei dem in Fig. 2 dargestellten Ausführungsbeispiel schliesst sich an das erste Walzenpaar 1, 1' ein zweites Walzenpaar 2, 2' an. Die Spalthöhe $h_2$ des zweiten Walzenpaares 2, 2' ist hierbei kleiner als die Spalthöhe $h_1$ des ersten Walzenpaares 1, 1'.

Eine Kernschicht 7 aus Kunststoff und beidseitig angeordnete Deckschichten 8, 8' aus Metall sowie dazwischenliegende Klebstoffschichten 9, 9' durchlaufen in Bewegungsrichtung x den Walzenspalt 3 unter Bildung einer Verbundbahn 10.

Von den einzelnen, die Verbundbahn 10 aufbauenden Schichten werden – in der Zeichnung nicht dargestellt – die Kernschicht 7 direkt – beispielsweise von einer Extrusionsanlage – und die Deckschichten 8, 8' sowie die Klebstoffschichten 9, 9' von Vorratsrollen an das Walzenpaar 1, 1' herangeführt.

Der Vortrieb der Verbundbahn 10 erfolgt durch die Einleitung einer Zugkraft Z über die angetriebenen Rollen 5, 5' des Abzugwerkes A. Die Walzen 1, 1' bzw. 2, 2' werden von der abgezogenen Verbundbahn 10 geschleppt.

Mit einer Vorrichtung wie sie in Fig. 1 dargestellt ist, wurden Verbundbahnen mit Deckschichten aus Aluminium bzw. Stahl und Kernschichten aus Polyäthylen und weich-PVC sowie verschiedenen Klebstoffschichten hergestellt.

Die Spalthöhe h des Walzenspaltes 3 betrug 10 bis 90% der Gesamtdicke der Schichten vor dem Verbinden; im einzelnen wurden Versuche bei den folgenden Werten durchgeführt:

90%  76%  64%  53%  42%  34%  26%  13%

Die Verbundbahnen wurden mit Ventilatoren jeweils so abgekühlt, dass die Temperatur am Eingang zum Abzugwerk höchstens 70°C betrug.

Die so hergestellten Verbundbahnen waren frei von Wellen und zeigten eine hohe Masshaltigkeit.

Die Haftfestigkeit zwischen den Einzelschichten war bei einem Verhältnis Spalthöhe : Dicke der Einzelschichten von 34% etwa fünfmal grösser als bei einem Verhältnis von 90%.

**Patentansprüche**

1. Verfahren zum kontinuierlichen Herstellen einer Verbundbahn mit wenigstens einer Kernschicht aus Kunststoff und beidseitig angeordneten Deckschichten aus Metall, bei dem die Schichten unter Wärme- und Druckeinwirkung durch einen von einem achsparallelen Walzenpaar, dessen Achsenebene senkrecht zur Verbundbahnebene liegt, gebildeten Spalt geführt werden, dadurch gekennzeichnet, dass durch Anlegen einer in Bewegungsrichtung wirkenden Zugkraft an die Verbundbahn die einzelnen Schichten ohne vorherige gegenseitige Berührung durch den von dem von der Zugkraft geschleppten Walzenpaar gebildeten Spalt, dessen Höhe kleiner ist als die Gesamtdicke der einzelnen Schichten vor dem Verbinden, geführt werden, wobei die Dicke der Verbundbahn im wesentlichen der Höhe des Spalts entspricht.

2. Verfahren nach Anspruch 1, dadurch gekennzeichnet, dass die aus dem Spalt heraustretende Verbundbahn durch mindestens einen weiteren durch ein geschlepptes achsparalleles Walzenpaar, dessen Achsenebene senkrecht zur Verbundbahnebene liegt, gebildeten Spalt geführt wird, dessen Höhe kleiner ist als die Gesamtdicke der einzelnen Schichten vor dem Verbinden.

3. Verfahren nach Anspruch 1 oder 2, dadurch gekennzeichnet, dass die Zugkraft nach dem Durchlaufen einer Abkühlstrecke an die Verbundbahn angelegt wird.

4. Verfahren nach einem der Ansprüche 1 bis 3, dadurch gekennzeichnet, dass die Höhe des Spalts 10–90%, vorzugsweise 30–60%, der Gesamtdicke der einzelnen Schichten vor dem Verbinden beträgt.

5. Verfahren nach einem der Ansprüche 2 bis 4, dadurch gekennzeichnet, dass mehrere Walzenpaare mit in Bewegungsrichtung der Verbundbahn abnehmenden Höhen der Spalte durchlaufen werden.

### Claims

1. Method for continuously producing a composite sheet having at least one core layer of plastic and outer layers of metal arranged on both sides, in which the layers are passed through a nip formed by an axially parallel pair of rolls, the axial plane of which is perpendicular to the plane of the composite sheet, under the action of heat and pressure, characterized in that, by applying a tensile force acting in the direction of movement to the composite sheet, the individual layers are passed, without previously touching one another, through the nip formed by the pair of rolls dragged by the tensile force, the height of which nip is smaller than the overall thickness of the individual layers before bonding, the thickness of the composite sheet corresponding substantially to the height of the nip.

2. Method according to Claim 1, characterized in that the composite sheet emerging from the nip is passed through at least one further nip formed by a dragged, axially parallel pair of rolls, the axial plane of which is perpendicular to the plane of the composite sheet, the height of which nip is smaller than the overall thickness of the individual layers before bonding.

3. Method according to Claim 1 or 2, characterized in that the tensile force is applied to the composite sheet after passage through a cooling zone.

4. Method according to one of Claims 1 to 3, characterized in that the height of the nip is 10–90%, preferably 30–60%, of the overall thickness of the individual layers before bonding.

5. Method according to one of Claims 2 to 4, characterized in that several pairs of rolls having heights of the nips decreasing in the direction of movement of the composite sheet are passed through.

### Revendications

1. Procédé de fabrication continue d'une bande composite stratifiée constituée d'au moins une âme en plastique et de couches métalliques de revêtement disposées des deux côtés, dans lequel on fait passer les couches, avec intervention de la chaleur et de la pression, à travers une fente formée par une paire de cylindres à axes parallèles, dont le plan des axes est perpendiculaire au plan de la bande composite stratifiée, caractérisé en ce que c'est en appliquant à la bande composite stratifiée une force de traction agissant dans le sens du mouvement que l'on fait passer les différentes couches, sans contact mutuel préalable, à travers la fente qui est formée par la paire de cylindres entraînés par la force de traction et dont la hauteur est inférieure à l'épaisseur totale des différentes couches avant stratification, étant précisé que l'épaisseur de la bande composite stratifiée correspond essentiellement à la hauteur de la fente.

2. Procédé selon la revendication 1, caractérisé en ce que l'on fait passer la bande composite stratifiée sortant de la fente à travers une autre fente qui est formée par une paire de cylindres, d'axes parallèles, qui sont entraînés par la force de traction et dont le plan des axes est perpendiculaire au plan de la bande composite stratifiée, la hauteur de la fente étant inférieure à l'épaisseur totale des différentes couches avant stratification.

3. Procédé selon la revendication 1 ou 2, caractérisé en ce que la force de traction est appliquée à la bande composite stratifiée après traversée d'une longueur de refroidissement.

4. Procédé selon l'une des revendications 1 à 3, caractérisé en ce que la hauteur de la fente atteint 10–90%, de préférence 30–60% de l'épaisseur totale des différentes couches avant la stratification.

5. Procédé selon l'une des revendications 2 à 4, caractérisé en ce que plusieurs paires de cylindres sont parcourues avec des hauteurs de la fente décroissantes dans le sens du mouvement de la bande composite stratifiée.

Fig. 1

**Fig. 2**

EP 0 087 546 B1